# EUROPÄISCHE PATENTSCHRIFT

(11) **EP 4 667 238 B1**
(45) Veröffentlichungstag und Bekanntmachung des Hinweises auf die Patenterteilung: **02.12.2026**
(21) Anmeldenummer: 25177548.2
(22) Anmeldetag: 20.05.2025
(51) Int. Cl.: B60C 9/06, B60C 9/18, B60C 15/00

(54) **FAHRZEUGLUFTREIFEN AUFWEISEND EINE DOPPELKARKASSE**
PNEUMATIC VEHICLE TYRE COMPRISING A DOUBLE CARCASS
PNEUMATIQUE DE VÉHICULE COMPORTANT UNE CARCASSE DOUBLE

(30) Priorität: 21.06.2024 DE 102024205796
(43) Veröffentlichungstag der Anmeldung: 24.12.2025
(73) Patentinhaber: Continental Reifen Deutschland GmbH, 30175 Hannover (DE)
(72) Erfinder: Sudikatis, Florian, 30175 Hannover (DE)
(74) Vertreter: Continental Corporation

(56) Entgegenhaltungen:
- EP-A2- 4 375 086
- DE-B- 1 222 810
- US-A- 3 062 258
- US-A1- 2018 304 690
- US-A1- 2021 188 005

## Beschreibung

Die Erfindung betrifft einen Fahrzeugluftreifen für ein Leichtfahrzeug, bevorzugt Fahrradreifen, besonders bevorzugt Mountainbike-Reifen, mit einem Laufstreifen, einer Reifenkarkasse, Reifenseitenwänden und zwei Wulstbereichen mit je einem Wulstkern, wobei die Reifenkarkasse genau eine erste Karkasslage, welche im Reifenzenit die radial innerste Karkasslage bildet, und eine zweite Karkasslage aufweist, wobei die beiden Karkasslagen sich jeweils vom Reifenzenit aus über die Reifenseitenwände bis in die Wulstbereiche erstrecken, die Wulstkerne jeweils von axial innen nach axial außen umschlingen und in einem Karkasshochschlag nach radial außen über die Seitenwände bis unter den Laufstreifen geführt sind und dort innerhalb einer axialen Erstreckung des Laufstreifens in Karkasslagenenden enden.

Fahrradreifen mit einer Doppelkarkasse aus zwei Karkasslagen sind in unterschiedlichen Ausführungen bekannt.

Bekannt sind beispielsweise Fahrradreifen, bei denen nur eine der Karkasslagen überlappend bis unter den Laufstreifen geführt ist und die andere Karkasslage bereits im Wulstbereich endet, wie in der DE202020104281U1 offenbart. Derartige Karkassen weisen allerdings nur zwei Lagenstärken in den Seitenwänden auf.

Die EP4010204A1 offenbart Fahrradreifen mit weiteren Karkasskonstruktionen. Offenbart sind dabei insbesondere Fahrradreifen mit Doppelkarkassen, bei denen die Karkasshochschläge alle bis unter den Laufstreifen geführt und dort einander überlappend angeordnet sind. Hierdurch weist der Reifen in den Seitenwänden eine Lagenstärke von vier Lagen und im Zenit eine Lagenstärke von sechs Lagen auf. Eine solche Doppelkarkasse wird insbesondere eingesetzt, um den Reifen auch bei hohen Querkräften zu stabilisieren und eine Verschiebung des Reifens quer zur Fahrtrichtung (sogenanntes "Rollen") zu reduzieren. Entsprechend zeigt der Reifen selbst bei großer Belastung wie z.B. beim Downhill-Fahren ein vorteilhaftes Kurvenverhalten. Gleichzeitig weist der Reifen einen hohen Durchschlagschutz auf.

Im Zenit weist ein derartiger Reifen eine Lagenstärke von sechs Lagen und damit einen sehr guten Pannenschutz auf. Die hohe Lagenstärke erhöht jedoch das Gewicht und den Rollwiderstand und bedingt eine verminderte Anpassungsfähigkeit an den Untergrund aufgrund erhöhter Steifigkeit.

Aus der US 3,062,258 ist ein Fahrzeugluftreifen mit einer Doppelkarkasse bekannt, wobei die innere und äußere Lage der Karkasse jeweils an einer Schulter des Laufstreifens angeordnete Enden aufweisen und sich von einem Ende um die Wulstkerne herum zum anderen Ende erstrecken. In axialer Richtung haben die Enden einen Abstand zueinander, so dass die Karkasse unter der Lauffläche nur zweilagig, an den Seitenwänden jedoch vierlagig ist.

In der DE 1 222 810 ist ein Reifen mit einer Doppelkarkasse beschrieben, wobei außen um die Wulstkerne umgeschlagene Lageenden sich bis zur Zenitpartie des Reifens erstrecken und in der Zenitpartie unter Bildung einer Überlappungsstelle enden, wobei die Überlappungsstelle durch Doppelung der Lageenden der inneren Karkasslage gebildet ist und die Lageenden der äußeren Karkasslage sich nur bis an die Überlappungsstelle bzw. in den Bereich der Ränder der Überlappungsstelle erstrecken.

Die US 2018/0304690 A1 zeigt einen Reifen mit einem Laufstreifen, einer Gürtellage, Wulstkernen und einer Doppelkarkasse, wobei Enden einer inneren Lage der Karkasse sich in der Äquatorialebene des Reifens unterhalb des Laufstreifens bündig treffen und Enden einer äußeren Lage außerhalb des Laufstreifenbereichs angeordnet sind.

Der Erfindung liegt die Aufgabe zu Grunde, einen Fahrzeugluftreifen, bevorzugt einen Fahrradreifen, besonders bevorzugt einen Mountain-Bike Reifen, zur Verfügung zu stellen, der einen geringeren Rollwiderstand und eine verbesserte Anpassung an den Untergrund aufweist und gleichzeitig weiterhin einen hohen Durchschlagschutz sowie ein vorteilhaftes Kurvenverhalten bei hohen Querkräften, z.B. im Downhill, aufweist.

Gelöst wird die Aufgabe durch einen Reifen gemäß Anspruch 1.

Ein derartiger erfindungsgemäßer Reifen für Leichtfahrzeuge, bevorzugt ein Fahrradreifen, besonders bevorzugt ein Mountainbike-Reifen, zeichnet sich dadurch aus, dass die beiden ersten Karkasshochschläge der ersten Karkasslage auf derjenigen Reifenhälfte, auf welcher sie über die jeweilige Seitenwand geführt sind, mit ihrem jeweiligen Karkasslagenende in den axial äußeren 20% der gesamten axialen Erstreckung des Laufstreifens enden, dass sich die zweiten Karkasshochschläge der zweiten Karkasslage von der Seitenwand her kommend innerhalb der axialen Erstreckung des Laufstreifens jeweils über denjenigen ersten Karkasshochschlag hinaus erstrecken, welcher auf derselben Reifenhälfte über die Seitenwand geführt ist wie der jeweilige zweite Karkasshochschlag, wobei die beiden zweiten Karkasshochschläge einander axial überlappend oder einander bündig treffend angeordnet sind.

Die axiale Erstreckung des Laufstreifens oder andere axiale Abstände, axiale Längen, axiale Überlappungen etc. können im Sinne der Anmeldung ermittelt werden, indem senkrecht zur Umfangsrichtung ein Reifenabschnitt aus dem Reifen geschnitten und dieser auf einer ebenen Unterlage flach hingelegt wird und dann in diesem Bezugssystem die axiale Erstreckung bzw. der jeweilige axiale Abstand, axiale Länge oder die axiale Überlappung etc., ermittelt wird. Sollten die Laufstreifenenden nicht klar identifizierbar sein, so ist die axiale Erstreckung des Laufstreifens als nominelle Reifenbreite x 1,3 und der Laufstreifen als symmetrisch zur axialen Mitte des Reifens anzunehmen.

Die zweiten Karkasshochschläge der zweiten Karkasslage enden jeweils axial zwischen demjenigen ersten Karkasshochschlag, welcher auf derselben Reifenhälfte über die Seitenwand geführt ist wie der jeweilige zweite Karkasshochschlag und einem auf der jeweils anderen Reifenhälfte angeordneten Laufstreifenende des Laufstreifens. Da die erste Karkasslage auf jeder Reifenhälfte mit ihrem jeweiligen ersten Karkasshochschlag lediglich bis maximal über die axial äußeren 20% der gesamten axialen Erstreckung des Laufstreifens geführt ist, weist der Reifen in den axial inneren 60% der gesamten Erstreckung des Laufstreifens eine Lagenstärke von zwei bis vier Lagen auf, wobei die erste Karkasslage lediglich eine Lagenstärke beiträgt.

Es hat sich herausgestellt, dass ein solcher Fahrzeugluftreifen für ein Leichtfahrzeug, bevorzugt Fahrradreifen, besonders bevorzugt Mountain-Bike Reifen dessen Karkasse durch die spezielle Karkasskonstruktion eine Lagenstärke von vier Lagen in der Seitenwand und eine Lagenstärke von maximal vier Lagen im Zenit aufweist, bei hohem Durchschlagschutz und verbesserter Seitenstabilität ein geringeres Gewicht als ein Reifen mit einer üblichen Doppelkarkasse mit einer Lagenstärke von sechs Lagen im Zenit aufweist. Durch die erfindungsgemäß verringerte Lagenstärke im Zenit ist zudem eine verringerte Steifigkeit im Laufstreifenbereich erreicht.

Es hat sich somit gezeigt, dass der erfindungsgemäße Fahrzeugluftreifen bei verringertem Rollwiderstand, vorteilhaftem Durchschlagschutz sowie vorteilhaftem Kurvenverhalten bei hohen Querkräften und eine verbesserte Anpassung an den Untergrund ermöglicht.

Derartige Eigenschaften sind beispielsweise bei kurvenreichen Downhillfahrten, insbesondere im Renneinsatz, von besonderem Vorteil.

Verglichen mit einem Fahrzeugluftreifen mit einer Lagenstärke von nur drei Lagen in der Seitenwand ergibt sich erfindungsgemäß eine höhere Festigkeit und ein besseres Kurvenverhalten durch ein geringeres Rollen in axialer Richtung, da die Seitenführungskräfte erhöht sind. Der erfindungsgemäße Fahrzeugluftreifen weist, bei nur mäßig erhöhtem Gewicht, eine erhöhte Stabilität bei Kurvenfahrten auf, was insbesondere bei Downhillfahrten, v.a. im Renneinsatz, von großem Vorteil ist.

Eine vorteilhafte Ausführungsform ist dadurch gegeben, dass die beiden zweiten Karkasshochschläge, insbesondere in der axialen Mitte des Reifens, einander axial überlappend, bevorzugt mit einer axialen Überlappung von 5% bis 90%, bevorzugt 20% bis 80%, besonders bevorzugt 40% bis 60%, der axialen Erstreckung des Laufstreifens, angeordnet sind.

Somit sind im Überlappungsbereich vier Lagenstärken angeordnet, wodurch bei noch immer geringer Lagenstärke ein vorteilhafter Durchstichschutz gegeben ist.

Vorteilhaft ist dabei eine axiale Überlappung von 5% bis 90%, bevorzugt 20% bis 80%, besonders bevorzugt 40% bis 60%, der axialen Erstreckung des Laufstreifens. Durch eine solche axiale Überlappung ist der Durchstichschutz versus Materialeinsatz optimiert.

Eine vorteilhafte Ausführungsform ist dabei dadurch gegeben, dass zumindest einer oder beide der beiden zweiten Karkasshochschläge überlappungsfrei oder überlappend oder bündig treffend mit dem ersten Karkasshochschlag dejeweils anderen Reifenhälfte endet.

Eine andere vorteilhafte Ausführungsform ist dadurch gegeben, dass die beiden zweiten Karkasshochschläge, insbesondere in der axialen Mitte des Reifens, einander bündig treffend angeordnet sind.

Somit weist die Karkasse zwischen den zweiten Karkasshochschlägen durchgehend drei Lagenstärken und in den Seitenwänden vier Lagenstärken auf. Hierdurch ist im Zenit eine geringe Steifigkeit bei Vermeidung von Steifigkeitssprüngen ermöglicht.

Hierdurch weist der Reifen im überlappungsfreien Bereich lediglich eine Lagenstärke von zwei Karkasslagen auf, wodurch der Reifen besonders materialarm ausgelegt ist und sich besonders gut an den Untergrund anpassen kann.

Vorteilhaft ist hierbei eine Kombination mit einer Schutzlage aufweisend insbesondere textile Festigkeitsträger. Diese Schutzlage kann bezüglich er jeweiligen Bedürfnisse wie Schnittschutz und/oder Stichschutz optimiert sein, wodurch im Vergleich zu einer größeren Karkasslagenstärke der Schutz bei geringem Gericht erhöht sein kann.

Vorteilhat ist bei der beabstandeten Ausführung, wenn der axiale Abstand maximal 60%, bevorzugt maximal 50%, beträgt.

Eine vorteilhafte Ausführungsform ist dadurch gegeben, dass die erste Karkasslage und/oder die zweite Karkasslage, bevorzugt die erste Karkasslage und die zweite Karkasslage, axial symmetrisch angeordnet ist.

Hierdurch ist eine besonders einfache Ausführungsform erwirkt. Eine axiale Asymmetrie kann reduziert bzw. vermieden sein.

Eine vorteilhafte Ausführungsform ist dadurch gegeben, dass radial zwischen der Karkasse und dem Laufstreifen eine oder zwei Schutzlagen aufweisend Festigkeitsträger angeordnet sind, welche radial außerhalb der Wulstkerne, insbesondere innerhalb der axialen Erstreckung des Laufstreifens, enden.

Der Reifen weist somit einen zusätzlichen Schnittschutz bzw. Durchstichschutz auf. Eine derartige Schutzlage aufweisend Festigkeitsträger kann gerade dann sinnvoll sein, wenn die Karkasse im Zenit eine im Vergleich zu den Seitenwänden reduzierte Lagenstärke aufweist. In diesem Fall können Steifigkeitssprünge in axialer Richtung vermieden werden.

Gemäß der Erfindung unterscheidet sich eine Schutzlage von einer Karkasslage zumindest darin, dass gemäß der Erfindung jede Karkasslage auf beiden Reifenhälften die Wulstkerne umschlingt wohingegen eine Schutzlage auf beiden Reifenhälften radial außerhalb der Wulstkerne endet und diese somit nicht umschlingt.

Eine vorteilhafte Ausführungsform dabei ist dadurch gegeben, dass zumindest eine Schutzlage der einen oder zwei Schutzlagen alle offenen Enden der Karkasslagen abdeckt.

Hierdurch ist ein Ablösen (Delamination) der offenen Enden der Karkasslagen vermieden und ein verbesserter Pannenschutz bei erhöhter Einfederung des Reifens und bei Kurvenfahrten erzielt.

Eine vorteilhafte Ausführungsform mit einer oder zwei Schutzlagen ist dadurch gegeben, dass zumindest eine Schutzlage der einen oder zwei Schutzlagen axial zwischen den ersten Karkasslagenenden angeordnet sind.

Die Schutzlage ist somit auf den Bereich der geringeren Karkasslagenstärke begrenzt, wodurch Steifigkeitssprünge vermieden und der Materialeinsatz verringert ist.

Eine vorteilhafte Ausführungsform ist dadurch gegeben, dass die Karkasse eine Diagonalkarkasse ist, wobei die Festigkeitsträger der beiden Karkasslagen (6,7) bei gegenläufiger Steigrichtung in den Seitenwänden jeweils einen Winkel von 25° bis 75°, bevorzugt von 35° bis 60°, besonders bevorzugt von 40° bis 55°, mit der Umfangsrichtung einschließen.

Bei einer solchen Diagonalkarkasse sind die Vorteile der Fahrstabilität und des Durchschlagschutzes von besonderer Bedeutung.

Eine vorteilhafte Ausführungsform ist dadurch gegeben, dass die Festigkeitsträger der ersten Karkasslage und/oder der zweiten Karkasslage textile Festigkeitsträger, bevorzugt aufweisend Polyamid, Polyester und/oder Baumwolle sind.

Textile Festigkeitsträger eigenen sich hervorragend als Karkassmaterial. Die textilen Festigkeitsträger können ganz oder teilweise aus Polyamid, bevorzugt aus Polyamid 4.6 oder Polyamid 6.6, besonders bevorzugt aus Polyamid 6.6, oder aus Polyester, bevorzugt aus Polyethylenterephthalat (PET), und/oder aus Baumwolle gebildet sein.

Der Fahrzeugluftreifen für Leichtfahrzeuge eignet sich hervorragend für Fahrräder einschließlich rein muskelbetriebene Fahrräder und Elektrofahrräder, Lastenräder, für Roller, einschließlich Elektroroller, für Rollstühle, oder dergleichen. Entsprechend kann es sich um einen Fahrradreifen und/oder um einen Rollerreifen und/oder einen Rollstuhlreifen handeln.

Der Fahrzeugluftreifen eignet sich hervorragend für Zweiräder, insbesondere Fahrräder. Der Fahrzeugluftreifen eignet sich aber auch für mehrrädrige Fahrzeuge wie beispielsweise dreirädrige Lastenfahrräder.

Eine vorteilhafte Ausführungsform ist dadurch gegeben, dass es sich um einen Fahrradreifen, insbesondere um einen Fahrradreifen für einen Einsatzbereich gemäß mindestens Kategorie 1, bevorzugt Kategorie 4 und/oder 5 oder höher, der ASTM F2043-13, handelt.

In einer bevorzugten Ausführungsform handelt es sich um einen Fahrradreifen, insbesondere Fahrradreifen für einen Einsatzbereich gemäß mindestens Kategorie 1, bevorzugt Kategorie 4 und/oder 5 oder höher, der ASTM F2043-13, ist ein guter Durchschlagschutz und vorteilhaftes Kurvenverhalten bei gleichzeitig verbesserter Anpassung an den Untergrund von besonderer Bedeutung. Ein Einsatzbereich gemäß Kategorie 4 umfasst beispielsweise Abfahrten in rauem Gelände bis zu einer Geschwindigkeit von max. 40 km/h sowie Sprünge bis zu einer Höhe von max. 122 cm. Ein Einsatzbereich gemäß Kategorie 5 umfasst beispielsweise Abfahrten in rauem Gelände bis zu einer Geschwindigkeit von über 40 km/h. Ein Einsatzbereich höher als Kategorie 5 kann über die in den Kategorien spezifizierten Belastungen hinaus gehen.

Es kann sich um einen Mountainbike-Reifen und/oder Downhillreifen und/oder Enduro Reifen und/der Gravel-Reifen handeln. Für derartige Fahrradreifen ist ein guter Durchschlagschutz und vorteilhaftes Kurvenverhalten bei gleichzeitig verbesserter Anpassung an den Untergrund von besonderer Bedeutung.

Der Fahrradreifen kann eine Querschnittsbreite von 35 mm bis 132 mm, bevorzugt von 45 mm bis 70 mm, aufweisen.

Der Fahrradreifen kann im Zenit eine Materialstärke von 1,4 mm bis 10 mm von den radial äußersten Karkassfestigkeitsträgern bis zur Lauffläche aufweisen.

Alle in dieser Beschreibung wiedergegebenen Ausführungsformen der erfindungsgemäßen Fahrzeugluftreifen für ein Leichtfahrzeug stellen Beispiele der Ausgestaltung der Erfindung dar und sind nicht einschränkend zu sehen. Entsprechend sind auch durch einzelne oder mehrere Merkmale einer Ausführungsform alleine oder die Kombination der Merkmale verschiedener Ausführungsformen weitere Ausführungsformen der Erfindung gegeben, die Gegenstand der Erfindung sind, soweit diese nicht explizit anders in der Beschreibung erläutert wird. Ferner sind auch Kombinationen von bevorzugten und besonders bevorzugten Ausführungsformen untereinander miteinander kombinierbar.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen Querschnitt durch einen Fahrzeugluftreifen gemäß der Erfindung,
Fig. 2 einen Querschnitt durch einen Fahrzeugluftreifen gemäß der Erfindung,
Fig. 3 einen Querschnitt durch einen Fahrzeugluftreifen, der nicht der Erfindung entspricht,
Fig. 4 flache Anordnung des Fahrzeugluftreifens gemäß Fig. 1.

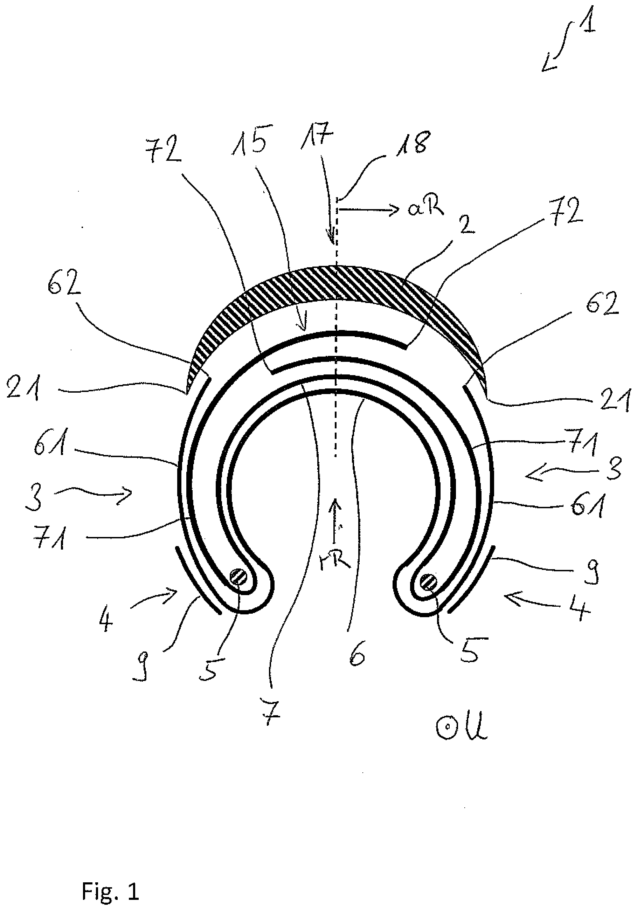

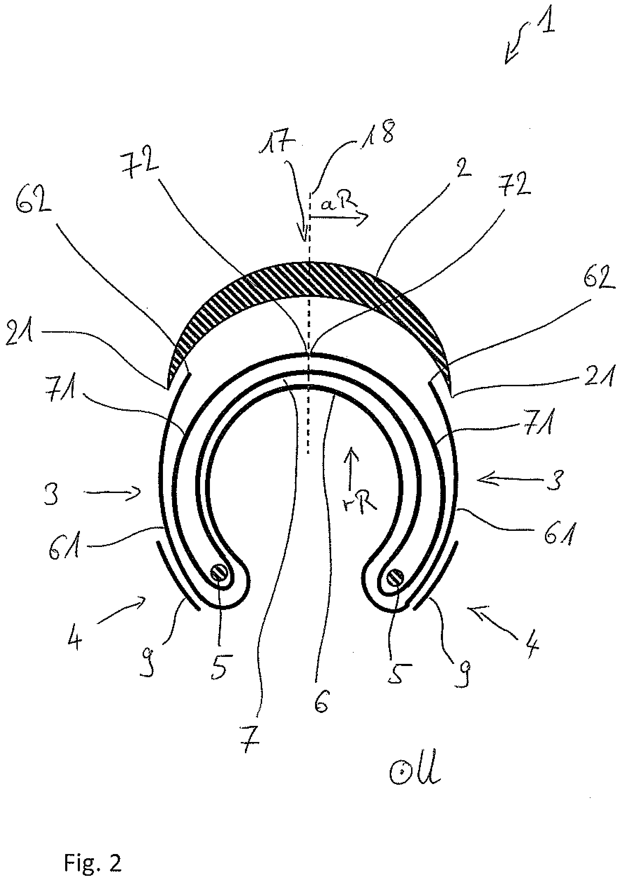

Die Figuren 1 und 2 zeigen schematisch jeweils einen Querschnitt durch einen Fahrzeugluftreifens gemäß der Erfindung.

Es handelt sich jeweils um einen Fahrzeugluftreifen 1 für ein Leichtfahrzeug, bevorzugt um einen Fahrradreifen, besonders bevorzugt um einen Mountainbike-Reifen, mit einem Laufstreifen 2, einer Reifenkarkasse, Reifenseitenwänden 3 und zwei Wulstbereichen 4 mit je einem Wulstkern 5, wobei die Reifenkarkasse genau eine erste Karkasslage 6, welche im Reifenzenit 17 die radial innerste Karkasslage bildet, und eine zweite Karkasslage 7 aufweist. Die beiden Karkasslagen 6,7 erstrecken sich jeweils vom Reifenzenit 17 aus über die Reifenseitenwände 3 bis in die Wulstbereiche 4, umschlingen dort die Wulstkerne 5 von axial innen nach axial außen und sind in einem Karkasshochschlag 61,71 nach radial außen über die Seitenwände 3 bis unter den Laufstreifen 2 geführt und enden innerhalb einer axialen Erstreckung 8 des Laufstreifens in Karkasslagenenden 62,72.

Die ersten Karkasshochschläge 61 der ersten Karkasslage 6 enden auf derjenigen Reifenhälfte, auf welcher sie über die jeweilige Seitenwand 3 geführt sind, mit ihrem jeweiligen Karkasslagenende 62 in den axial äußeren 20% der gesamten axialen Erstreckung (8) des Laufstreifens (2). Die zweiten Karkasshochschläge 71 der zweiten Karkasslage 7 sind jeweils mit ihrem jeweiligen Karkasslagenende 72 weiter geführt als derjenige erste Karkasshochschlag 61, welcher auf derselben Reifenhälfte über die Seitenwand geführt ist wie der jeweilige zweite Karkasshochschlag 71. Die zweiten Karkasshochschläge 71 der zweiten Karkasslage 7 enden somit jeweils axial zwischen demjenigen ersten Karkasshochschlag 61, welcher auf derselben Reifenhälfte über die Seitenwand geführt ist wie der jeweilige zweite Karkasshochschlag 71 und einem auf der jeweils anderen Reifenhälfte angeordneten Laufstreifenende 21 des Laufstreifens.

Der Reifen weist somit in den Seitenwänden 3 eine Lagenstärke der Karkasse von vier Lagen auf und im Zenit eine Lagenstärke der Karkasse von zwei bis vier Lagen.

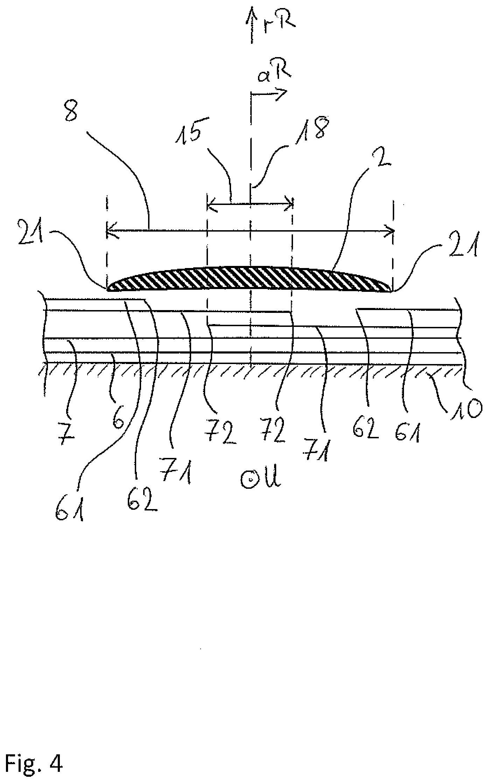

Die axiale Erstreckung 8 des Laufstreifens 2 oder andere axiale Abstände, axiale Längen, axiale Überlappungen etc. können im Sinne der Anmeldung ermittelt werden, indem senkrecht zur Umfangsrichtung U ein Reifenabschnitt aus dem Reifen geschnitten und dieser auf eine ebene Unterlage 10 flach gedrückt wird und dann in diesem Bezugssystem die axiale Erstreckung bzw. der jeweilige axiale Abstand, axiale Länge oder die axiale Überlappung etc., ermittelt wird. Zur Verdeutlichung ist ein derartigen Anordnung des Reifens auf einer ebenen Unterlage 10, exemplarisch für den Reifen gemäß Figur 1, in der Figur 4 skizziert. Sollten die Laufstreifenenden 21 nicht klar identifizierbar sein, so ist die axiale Erstreckung des Laufstreifens als nominelle Reifenbreite x 1,3 und der Laufstreifen als symmetrisch zur axialen Mitte 18 des Reifens anzunehmen.

Die erste Karkasslage 6 und/oder die zweite Karkasslage 7, bevorzugt wie in den Figuren dargestellt die erste Karkasslage 6 und die zweite Karkasslage 7, können weitgehend axial symmetrisch angeordnet sein.

Der Reifen kann, wie dargestellt, optional einen Wulstschutz 9 aufweisen.

Die Karkasse ist bevorzugt als Diagonalkarkasse ausgeführt, wobei die Festigkeitsträger der beiden Karkasslagen 6,7 bei gegenläufiger Steigrichtung in den Seitenwänden jeweils einen Winkel von 25° bis 75°, bevorzugt von 35° bis 60°, besonders bevorzugt von 40° bis 55°, mit der Umfangsrichtung einschließen.

Die Festigkeitsträger einer oder beider Karkasslagen 6,7 sind textile Festigkeitsträger. Sie können ganz oder teilweise aus Polyamid, bevorzugt Polyamid 4.6 oder Polyamid 6.6, oder aus Polyester gebildet sein. Besonders bevorzugt sind Festigkeitsträger aus Polyamid 6.6.

Es handelt sich insbesondere um einen Fahrradreifen 1, bevorzugt um einen Fahrradreifen für einen Einsatzbereich gemäß mindestens Kategorie 1, bevorzugt Kategorie 4 und/oder 5 und/oder höher, der ASTM F2043-13. Es kann sich um einen Mountainbike-Reifen und/oder Downhillreifen und/oder Enduro Reifen und/der Gravel-Reifen handeln. Der Fahrradreifen kann eine Querschnittsbreite von 35 mm bis 132 mm, bevorzugt von 45 mm bis 70 mm, aufweisen.

Bei dem in der Figur 1 dargestellten Reifen sind die beiden zweiten Karkasshochschläge 72, insbesondere wie dargestellt in der axialen Mitte 18 des Reifens 1, einander axial überlappend angeordnet. Die axiale Überlappung 15 beträgt dabei 5% bis 90%, bevorzugt 20% bis 80%, besonders bevorzugt 40% bis 60%, der axialen Erstreckung 8 des Laufstreifens.

Im Überlappungsbereich weist der Reifen somit eine Lagenstärke der Karkasse von vier Lagenstärken auf.

Bei einem solchen Reifen kann zumindest einer oder beide der beiden zweiten Karkasshochschläge 72 überlappend oder bündig treffend oder, wie dargestellt, überlappungsfrei, mit dem ersten Karkasshochschlag 61 der jeweils anderen Reifenhälfte enden.

Bei dem in der Figur 2 dargestellten Reifen 1 sind die beiden zweiten Karkasslagenhochschläge 71, insbesondere wie dargestellt in der axialen Mitte 18 des Reifens 1, einander bündig treffend angeordnet. Der Reifen weist somit in seinem Zenit eine Lagenstärke der Karkasse von drei Lagen auf.

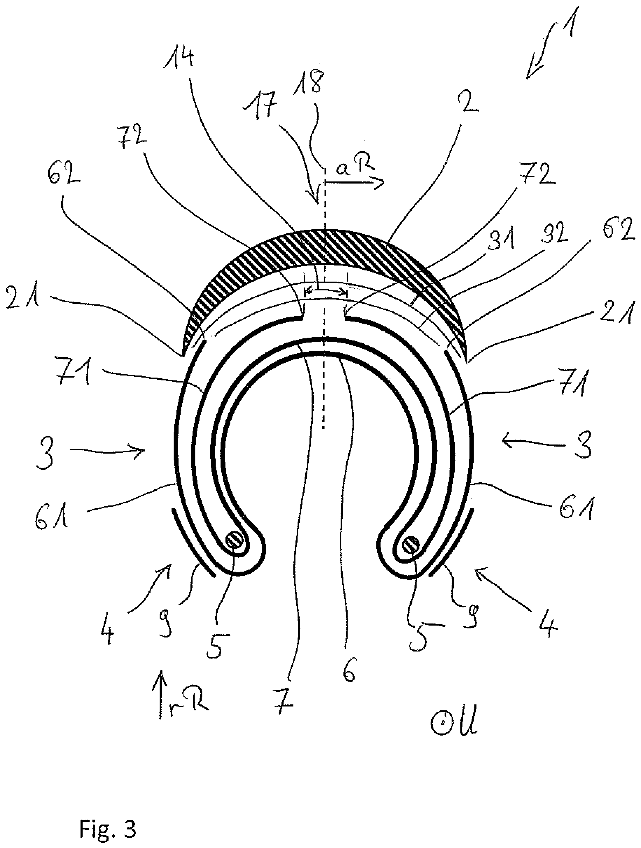

Bei dem in der Figur 3 dargestellten Reifen 1 sind die beiden zweiten Karkasshochschläge 71 überlappungsfrei angeordnet und voneinander axial beabstandet angeordnet. Bevorzugt enden sie mit einem axialen Abstand 14 ihrer Karkasslagenenden 72 von mindestens 20%, besonders bevorzugt mit einem axialen Abstand von mindestens 40%, der axialen Erstreckung 8 des Laufstreifens, wobei der axiale Abstand maximal 60%, bevorzugt maximal 50%, beträgt.

Beispielhaft sind in der Figur 3 zwei Schutzlagen 31,32 dargestellt. Der Reifen kann aber auch nur eine der beiden Schutzlagen 31,32 oder keine Schutzlage der dargestellten Schutzlagen 31,32 aufweisen. Auch die Reifen der Figuren 1 und/oder 2 können eine oder beide Schutzlagen 31,32 aufweisen nicht dargestellt. Die eine oder zwei Schutzlagen 31,32 sind radial zwischen der Karkasse und dem Laufstreifen 2 angeordnet. Die Schutzlagen 31,32 weisen Festigkeitsträger auf, welche radial außerhalb der Wulstkerne 5, insbesondere innerhalb der axialen Erstreckung 8 des Laufstreifens 2, enden. Beispielhaft deckt die radial äußere Schutzlage 31 alle offenen Karkasslagenenden 62,72 ab. Beispielhaft ist die radial innere Schutzlage 32 axial zwischen den ersten Karkasslagenenden 62 angeordnet.

### Bezugszeichenliste

- 1: Fahrzeugluftreifen
- 2: Laufstreifen
- 3: Reifenseitenwand
- 4: Wulstbereich
- 5: Wulstkern
- 6: erste Karkasslage
- 7: zweite Karkasslage
- 8: axiale Erstreckung des Laufstreifens
- 9: Wulstschutz
- 10: ebene Unterlage
- 14: axialer Abstand
- 15: axiale Überlappung
- 17: Reifenzenit
- 18: axiale Mitte
- 21: Laufstreifenende
- 31,32: Schutzlage
- 61: erster Karkasshochschlag
- 62: Karkasslagenende der ersten Karkasslage
- 71: zweiter Karkasshochschlag
- 72: Karkasslagenende der zweiten Karkasslage

- U: Umfangsrichtung
- rR: radiale Richtung
- aR: axiale Richtung

## Patentansprüche

1. Fahrzeugluftreifen (1) für ein Leichtfahrzeug, bevorzugt Fahrradreifen, besonders bevorzugt Mountainbike-Reifen, mit einem Laufstreifen (2), einer Reifenkarkasse, Reifenseitenwänden (3) und zwei Wulstbereichen (4) mit je einem Wulstkern (5),
• wobei die Reifenkarkasse genau eine erste Karkasslage (6), welche im Reifenzenit (17) die radial innerste Karkasslage bildet, und eine zweite Karkasslage (7) aufweist,
• wobei die beiden Karkasslagen (6,7) sich jeweils vom Reifenzenit (17) aus über die Reifenseitenwände (3) bis in die Wulstbereiche (4) erstrecken, die Wulstkerne (5) jeweils von axial innen nach axial außen umschlingen und in einem Karkasshochschlag (61,71) nach radial außen über die Seitenwände (3) bis unter den Laufstreifen (2) geführt sind und dort innerhalb einer axialen Erstreckung (8) des Laufstreifens (2) in Karkasslagenenden (62,72) enden,
• wobei die beiden ersten Karkasshochschläge (61) der ersten Karkasslage (6) auf derjenigen Reifenhälfte, auf welcher sie über die jeweilige Seitenwand (3) geführt sind, mit ihrem jeweiligen Karkasslagenende (62) in den axial äußeren 20% der gesamten axialen Erstreckung (8) des Laufstreifens (2) enden,
• und wobei sich die zweiten Karkasshochschläge (71) der zweiten Karkasslage (7) von der Seitenwand her kommend innerhalb der axialen Erstreckung (8) des Laufstreifens jeweils über denjenigen ersten Karkasshochschlag (61) hinaus erstrecken, welcher auf derselben Reifenhälfte über die Seitenwand geführt ist wie der jeweilige zweite Karkasshochschlag (71)
**dadurch gekennzeichnet, dass**
die beiden zweiten Karkasshochschläge (72) einander axial überlappend oder einander bündig treffend angeordnet sind.

2. Fahrzeugluftreifen (1) gemäß Anspruch 1, **dadurch gekennzeichnet, dass** die beiden zweiten Karkasshochschläge (72), insbesondere in der axialen Mitte (18) des Reifens (1), mit einer axialen Überlappung (15) von 5% bis 90%, bevorzugt 20% bis 80%, besonders bevorzugt 40% bis 60%, der axialen Erstreckung (8) des Laufstreifens (2), angeordnet sind.

3. Fahrzeugluftreifen (1) gemäß dem vorhergehenden Anspruch, **dadurch gekennzeichnet, dass** zumindest einer oder beide der beiden zweiten Karkasshochschläge (72) überlappungsfrei oder überlappend oder bündig treffend mit dem ersten Karkasshochschlag (61) der jeweils anderen Reifenhälfte endet.

4. Fahrzeugluftreifen (1) gemäß Anspruch 1, **dadurch gekennzeichnet, dass** die beiden zweiten Karkasshochschläge (72) in der axialen Mitte (18) des Reifens (1) einander bündig treffend angeordnet sind.

5. Fahrzeugluftreifen (1) gemäß zumindest einem der vorhergehenden Ansprüche, **dadurch gekennzeichnet, dass** die erste Karkasslage (6) und/oder die zweite Karkasslage (7), bevorzugt die erste Karkasslage (6) und die zweite Karkasslage (7), axial symmetrisch angeordnet ist.

6. Fahrzeugluftreifen (1) gemäß zumindest einem der vorhergehenden Ansprüche, **dadurch gekennzeichnet, dass** radial zwischen der Karkasse und dem Laufstreifen eine oder zwei Schutzlagen (31,32) aufweisend Festigkeitsträger angeordnet sind, welche radial außerhalb der Wulstkerne (5), insbesondere innerhalb der axialen Erstreckung (8) des Laufstreifens (2), enden.

7. Fahrzeugluftreifen (1) gemäß dem vorhergehenden Anspruch, **dadurch gekennzeichnet, dass** zumindest eine Schutzlage (31) der einen oder zwei Schutzlagen alle offenen Enden (62,72) der Karkasslagen (6,7) abdeckt.

8. Fahrzeugluftreifen (1) gemäß zumindest einem der Ansprüche 6 oder 7,
**dadurch gekennzeichnet, dass** zumindest eine Schutzlage (32) der einen oder zwei Schutzlagen axial zwischen den ersten Karkasslagenenden (62) angeordnet sind.

9. Fahrzeugluftreifen (1) gemäß zumindest einem der vorhergehenden Ansprüche, **dadurch gekennzeichnet, dass** die Karkasse eine Diagonalkarkasse ist, wobei die Festigkeitsträger der beiden Karkasslagen (6,7) bei gegenläufiger Steigrichtung in den Seitenwänden jeweils einen Winkel von 25° bis 75°, bevorzugt von 35° bis 60°, besonders bevorzugt von 40° bis 55°, mit der Umfangsrichtung einschließen.

10. Fahrzeugluftreifen (1) gemäß zumindest einem der vorhergehenden Ansprüche, **dadurch gekennzeichnet, dass** die Festigkeitsträger der ersten Karkasslage (6) und/oder der zweiten Karkasslage (7) textile Festigkeitsträger, bevorzugt aufweisend Polyamid, Polyester und/oder Baumwolle sind.

11. Fahrzeugluftreifen (1) nach zumindest einem der vorhergehenden Ansprüche,
**dadurch gekennzeichnet, dass**
es sich um einen Fahrradreifen (1), insbesondere um einen Fahrradreifen für einen Einsatzbereich gemäß mindestens Kategorie 1, bevorzugt Kategorie 4 und/oder 5 oder höher, der ASTM F2043-13, handelt.

## Claims

1. Pneumatic vehicle tyre (1) for a light vehicle, preferably bicycle tyre, particularly preferably mountain bike tyre, having a tread (2), a tyre carcass, tyre sidewalls (3) and two bead regions (4) each having a bead core (5),
• wherein the tyre carcass has exactly one first carcass ply (6), which forms the radially innermost carcass ply in the tyre zenith (17), and a second carcass ply (7),
• wherein the two carcass plies (6,7) each extend from the tyre zenith (17) via the tyre sidewalls (3) into the bead regions (4), loop in each case about the bead cores (5) from axially inside to axially outside, and are guided radially outside in a carcass turn-up (61, 71) over the sidewalls (3) as far as below the tread (2) and terminate there in carcass ply ends (62,72) within an axial extent (8) of the tread (2),
• wherein the two first carcass turn-ups (61) of the first carcass ply (6), on that tyre half on which they are guided over the respective sidewall (3), terminate by way of their respective carcass ply end (62) in the axially outer 20% of the entire axial extent (8) of the tread (2),
• wherein the second carcass turn-ups (71) of the second carcass ply (7), emanating from the sidewall, extend within the axial extent (8) of the tread in each case beyond that first carcass turn-up (61) that is guided over the sidewall on the same tyre half as the respective second carcass turn-up (71),
**characterized in that**
the two second carcass turn-ups (72) are arranged so as to axially overlap one another or meet flush with one another.

2. Pneumatic vehicle tyre (1) according to Claim 1, **characterized in that** the two second carcass turn-ups (72), in particular in the axial centre (18) of the tyre (1), are arranged with an axial overlap (15) of 5% to 90%, preferably 20% to 80%, particularly preferably 40% to 60%, of the axial extent (8) of the tread (2).

3. Pneumatic vehicle tyre (1) according to the preceding claim, **characterized in that** at least one or both of the two second carcass turn-ups (72) terminate so as not to overlap, or so as to overlap, or meet flush with the first carcass turn-up (61) of the respective other tyre half.

4. Pneumatic vehicle tyre (1) according to Claim 1, **characterized in that** the two second carcass turn-ups (72) are arranged so as to meet flush with one another in the axial centre (18) of the tyre (1).

5. Pneumatic vehicle tyre (1) according to at least one of the preceding claims, **characterized in that** the first carcass ply (6) and/or the second carcass ply (7), preferably the first carcass ply (6) and the second carcass ply (7), are arranged axially symmetrically.

6. Pneumatic vehicle tyre (1) according to at least one of the preceding claims, **characterized in that** one or two protective plies (31, 32) having strength members are arranged radially between the carcass and the tread, which protective plies terminate radially outside the bead cores (5), in particular within the axial extent (8) of the tread (2).

7. Pneumatic vehicle tyre (1) according to the preceding claim, **characterized in that** at least one protective ply (31) of the one or two protective plies covers all open ends (62,72) of the carcass plies (6,7).

8. Pneumatic vehicle tyre (1) according to at least one of Claims 6 and 7, **characterized in that** at least one protective ply (32) of the one or two protective plies is arranged axially between the first carcass ply ends (62).

9. Pneumatic vehicle tyre (1) according to at least one of the preceding claims, **characterized in that** the carcass is a diagonal carcass, wherein the strength members of the two carcass plies (6,7), in opposing directions of inclination in the sidewalls, each have an angle of 25° to 75°, preferably from 35° to 60°, particularly preferably from 40° to 55°, in relation to the circumferential direction.

10. Pneumatic vehicle tyre (1) according to at least one of the preceding claims, **characterized in that** the strength members of the first carcass ply (6) and/or of the second carcass ply (7) are textile strength members, preferably comprising polyamide, polyester and/or cotton.

11. Pneumatic vehicle tyre (1) according to at least one of the preceding claims,
**characterized in that**
this is a bicycle tyre (1), in particular a bicycle tyre for use in an application range according to at least category 1, preferably category 4 and/or 5 or higher, of ASTM F2043-13.

## Revendications

1. Pneumatique de véhicule (1) destiné à un véhicule léger, de préférence pneumatique de bicyclette, de manière particulièrement préférée pneumatique de vélo tout-terrain, comprenant une bande de roulement (2), une carcasse de pneumatique, des flancs (3) de pneumatique et deux zones de talon (4), chacune comprenant une tringle (5),
• la carcasse de pneumatique comprenant exactement une première nappe de carcasse (6), qui forme la nappe de carcasse radialement la plus interne au niveau du sommet (17) du pneumatique, et une deuxième nappe de carcasse (7),
• les deux nappes de carcasse (6, 7) s'étendant chacune, à partir du sommet (17) du pneumatique, à travers les flancs (3) de pneumatique jusque dans les zones de talon (4), entourant chacune les tringles (5) de l'intérieur vers l'extérieur dans le sens axial et étant guidées, dans un retour de carcasse (61, 71), radialement vers l'extérieur à travers les flancs (3) jusque sous la bande de roulement (2), où elles se terminent, à l'intérieur d'une étendue axiale (8) de la bande de roulement (2), dans des extrémités de nappe de carcasse (62, 72),
• les deux premiers retours de carcasse (61) de la première nappe de carcasse (6) se terminant, sur la moitié de pneumatique sur laquelle ils sont guidés à travers le flanc (3) correspondant, par leur extrémité de nappe de carcasse (62) respective dans les 20 % axialement extérieurs de l'étendue axiale (8) totale de la bande de roulement (2),
• et les deuxièmes retours de carcasse (71) de la deuxième nappe de carcasse (7), en venant du flanc, s'étendant, à l'intérieur de l'étendue axiale (8) de la bande de roulement, au-delà du premier retour de carcasse (61) correspondant, lequel est guidé, sur la même moitié de pneumatique, à travers le flanc que le deuxième retour de carcasse (71) correspondant,
**caractérisé en ce que**
les deux deuxièmes retours de carcasse (72) étant disposés en se chevauchant axialement l'un l'autre ou en venant en aboutement l'un contre l'autre.

2. Pneumatique de véhicule (1) selon la revendication 1, **caractérisé en ce que** les deux deuxièmes retours de carcasse (72), notamment dans la partie centrale axiale (18) du pneumatique (1), sont disposés avec un chevauchement axial (15) de 5 % à 90 %, de préférence de 20 % à 80 %, de manière particulièrement préférée de 40 % à 60 %, de l'étendue axiale (8) de la bande de roulement (2).

3. Pneumatique de véhicule (1) selon la revendication précédente, **caractérisé en ce qu'**au moins un des deux deuxièmes retours de carcasse (72), ou les deux, se termine sans chevauchement, avec chevauchement ou en venant en aboutement contre le premier retour de carcasse (61) de l'autre moitié de pneumatique correspondante.

4. Pneumatique de véhicule (1) selon la revendication 1, **caractérisé en ce que** les deux deuxièmes retours de carcasse (72) sont disposés, dans la partie centrale axiale (18) du pneumatique (1), en venant en aboutement l'un contre l'autre.

5. Pneumatique de véhicule (1) selon au moins l'une des revendications précédentes, **caractérisé en ce que** la première nappe de carcasse (6) et/ou la deuxième nappe de carcasse (7), de préférence la première nappe de carcasse (6) et la deuxième nappe de carcasse (7), est/sont disposée(s) de manière axialement symétrique.

6. Pneumatique de véhicule (1) selon au moins l'une des revendications précédentes, **caractérisé en ce que** des éléments porteurs de résistance comportant une ou deux nappes de protection (31, 32) sont disposés radialement entre la carcasse et la bande de roulement, lesquels se terminent radialement à l'extérieur des tringles (5), notamment à l'intérieur de l'étendue axiale (8) de la bande de roulement (2).

7. Pneumatique de véhicule (1) selon la revendication précédente, **caractérisé en ce qu'**au moins une nappe de protection (31) de la ou des deux nappes de protection recouvre toutes les extrémités ouvertes (62, 72) des nappes de carcasse (6, 7).

8. Pneumatique de véhicule (1) selon au moins l'une des revendications 6 ou 7, **caractérisé en ce qu'**au moins une nappe de protection (32) de la ou des deux nappes de protection est disposée axialement entre les premières extrémités de nappe de carcasse (62).

9. Pneumatique de véhicule (1) selon au moins l'une des revendications précédentes, **caractérisé en ce que** la carcasse est une carcasse diagonale, les éléments porteurs de résistance des deux nappes de carcasse (6, 7) délimitant, dans les flancs, avec la direction circonférentielle, des angles de 25° à 75°, de préférence de 35° à 60°, de manière particulièrement préférée de 40° à 55°, avec des sens d'inclinaison opposés.

10. Pneumatique de véhicule (1) selon au moins l'une des revendications précédentes, **caractérisé en ce que** les éléments porteurs de résistance de la première nappe de carcasse (6) et/ou de la deuxième nappe de carcasse (7) sont des éléments porteurs de résistance textiles, comprenant de préférence du polyamide, du polyester et/ou du coton.

11. Pneumatique de véhicule (1) selon au moins l'une des revendications précédentes,
**caractérisé en ce que**
il s'agit d'un pneumatique de bicyclette (1), notamment d'un pneumatique de bicyclette destiné à un domaine d'utilisation conforme à la catégorie 1 au minimum, de préférence à la catégorie 4 et/ou 5 ou supérieure, selon la norme ASTM F2043-13.
